# EUROPÄISCHE PATENTSCHRIFT

(11) **EP 1 083 094 B1**
(45) Veröffentlichungstag und Bekanntmachung des Hinweises auf die Patenterteilung: **12.07.2006**
(21) Anmeldenummer: 00118327.6
(22) Anmeldetag: 24.08.2000
(51) Int. Cl.: B60R 11/02, H04R 5/02

(54) **Sitzplatzbezogene Beschallungseinrichtung**
Sound system relating to a seat
Dispositif de sonorisation associé à un siège

(30) Priorität: 08.09.1999 DE 19942858
(43) Veröffentlichungstag der Anmeldung: 14.03.2001
(73) Patentinhaber: Volkswagen AG, 38436 Wolfsburg (DE)
(72) Erfinder: Hallas, Ernst O., Dr., 91301 Forchheim (DE)
(74) Vertreter: Meyer, Enno

(56) Entgegenhaltungen:
- DE-A- 4 328 720
- FR-A- 2 165 201
- GB-A- 2 300 329
- US-A- 4 023 566
- US-A- 5 838 808
- PATENT ABSTRACTS OF JAPAN vol. 1997, no. 03, 31. März 1997 (1997-03-31) & JP 08 314474 A (YANMAR DIESEL ENGINE CO LTD), 29. November 1996 (1996-11-29)
- PATENT ABSTRACTS OF JAPAN vol. 009, no. 031 (E-295), 9. Februar 1985 (1985-02-09) & JP 59 174090 A (PIONEER KK), 2. Oktober 1984 (1984-10-02)
- PATENT ABSTRACTS OF JAPAN vol. 005, no. 137 (E-072), 29. August 1981 (1981-08-29) & JP 56 072600 A (ASHIKARI EIZO), 16. Juni 1981 (1981-06-16)

## Beschreibung

Die Erfindung betrifft eine sitzplatzbezogene Beschallungseinrichtung, insbesondere für Sitzplätze in einem Fahrzeug, bestehend aus mehreren Lautsprechern und einer Vorrichtung, an welcher zumindestens ein Lautsprecher befestigt ist. Eine gattungsgemäße Anordnung ist bekannt aus der DE-A-4328720.

Von der Firma Sennheiser sind verschiedene Beschallungseinrichtungen bekannt. Es ist insbesondere ein sogenannter "Surrounder" bekannt, welcher auf die Schultern eines Benutzers aufgesetzt wird. Dieser "Surrounder" hat die Eigenschaft, einen akustischen 3-D-Surround-Effekt beim Nutzer zu erwecken. Dieser "Surrounder" ist als Styroporkörper mit integrierten Bassreflexhohlraum ausgebildet. Der "Surrounder" hat im vorderen Bereich einen geschlossenen Kragen, in welchen Hochtonlautsprecher eingearbeitet sind. Im weiteren ist eine Steuerelektronik sowie weitere Anschlussbuchsen vorhanden. Die Basslautsprecher sind im hinteren Bereich des "Sourrounders" eingebaut und nutzen durch die Anbringung in Ohrennähe und den Körperkontakt beim tragen die gewandelten Signale sehr effizient. Der Nutzer hört ein komplettes Klangbild mit kräftigen Bässen, wobei benachbarte Personen fast nur die höheren Töne, die relativ gering störend wirken, wahrnehmen.

Im weiteren sind Freisprecheinrichtungen für Personenkraftwagen bekannt, welche über eine Audioanlage im Fahrzeug gekoppelt sind. Bei diesen Freisprecheinrichtungen ist ein Mikrofon vorgesehen, über welches der Fahrer des Fahrzeuges seine Sprachsignale eingibt. Über die Lautsprecher der Audioanlage im Fahrzeug wird das an den Fahrer zu übermittelnde Sprachsignal übertragen. Das Mikrofon wird als "Head-Set" vom Nutzer am Kopf getragen.

Nachteilig bei den bekannten Einrichtungen ist, daß die Lautsprechereinheit über einen Kragen direkt am Körper; oder als Head-Set direkt am Kopf getragen werden muß. Daher sind diese Einrichtungen aus Sicherheitsgründen in einem Fahrzeug nicht zum Einsatz geeignet, das Verletzungsrisiko im Falle eines Verkehrsunfalles ist zu groß.

Es ist daher Aufgabe der Erfindung eine Lösung aufzuzeigen, welche ein hohes Sicherheitspotential im Falle eines Unfalles aufweist und es zugleich mehreren Personen in einem Fahrzeug ermöglicht, ohne Störung der anderen Personen, ein individuelles Programm zu hören.

Diese Aufgabe wird durch die Merkmale des Anspruches 1 gelöst.

Vorteilhafte Ausgestaltungen sind in den abhängigen Ansprüchen aufgeführt.

Weitere Vorteile der vorliegenden Erfindung ergeben sich aus der nachfolgenden Beschreibung anhand von Figuren.

Die sitzplatzbezogene Beschallungseinrichtung ist an einem Sitz 1 in einem Fahrzeug befestigt und besteht aus mindestens zwei Teleskopstangen 2, welche in sich verschieblich gelagert sind. An jede dieser Teleskopstangen 2 ist mindestens ein Lautsprecher 3 angeordnet. Im weiteren ist mindestens ein Lautsprecherpaar 4 vorhanden, welches entweder an den Teleskopstangen 2 oder aber im Sitz 1 angeordnet ist, vorhanden. Bei der Anordnung der Lautsprecher 4 im Sitz sind diese symmetrisch zur Mitte der Sitzlehne, im oberen oder mittleren Bereich der Sitzlehne angeordnet. Im weiteren ist eine Bedieneinheit 8 vorgesehen, über welche eine im Fahrzeug vorhandene Audioanlage 13, z.B. CD-Spieler, Rundfunkempfänger, welche die Versorgung der sitzplatzbezogene Beschallungseinrichtung mit Audiosignalen besorgt, steuerbar ist.
Im weiteren ist eine Steuereinheit 9 vorhanden, welche die Bediensignale der Bedieneinheit 8 auswertet und die Eingaben der Bedieneinheit 8 an eine jeweilig zuständige Einheit übermittelt. Im weiteren ist mindestens ein Elektromotor 11 sowie eine Verstärkereinheit 10 vorhanden.

Die Teleskopstangen 2 sind am Sitz 1 an dessen oberen Ende angeordnet. Die Teleskopstangen 2 sind in der Art und Weise angebracht, daß sie um eine Drehachse um den Befestigungpunkt schwenkbar sind. Dies hat den Vorteil, daß die Teleskopstangen 2 bei Nichtnutzung an den Sitz 1 angeklappt bzw. in diesen eingeklappt werden können.
Bei Inbetriebnahme der sitzplatzbezogenen Beschallungseinrichtung werden die Teleskopstangen 2 an die entsprechende Körpergröße eines Nutzers angepaßt, so daß ein individueller optimaler Höreindruck zustande kommt.

Die Teleskopstangen 2 sind miteinander über den Sitz 1 und der Befestigungsvorrichtung 6 derart gekoppelt, daß diese sich nur synchron beweglich lassen, so daß ein Bewegen einer Teleskopstange 2 zugleich die identische Bewegung des zweiten Teleskopstange 2 bewirkt.

Die Teleskopstangen 2 sind in sich beweglich gelagert und um die Befsetigungsvorrichtung 6 als Drehpunkt schwenkbar. Somit ist es möglich die Telesopstangen 2 mit den Lautsprechern 3 optimal auf den Sitz 1 und eine darauf sitzende Person einzustellen.

In einer vorteilhaften Ausgestaltung der Erfindung werden über Elektromotoren 11 die Teleskopstangen 2 mechanisch bewegt. Über die Bedieneinheit 8 sind die Motoren 11 und somit die Bewegung der Teleskopstangen 2 steuerbar.

In einer vorteilhaften Ausgestaltung der Erfindung sind die Teleskopstangen 2 als biegbare Federstäbe oder aber starre formbare Federstäbe ausgebildet.

Am Ende einer jeden Teleskopstange 2 ist zumindestens ein Lautsprecher 3 angeordnet, welcher in Richtung des Sitzes 1 den Schall anstrahlt. Auf diese Weise ist gewährleistet, daß der Schall des Lautsprechers 3 optimal an die Person, welche auf dem Sitz 1 platzgenommen hat, abgestrahlt wird. Auf diese Weise wird einen Beeinträchtigung einer weiteren benachbart sitzenden Personen weitgehend vermieden.

Im weiteren sind Lautsprecher 4 vorgesehen. Diese Lautsprecher 4 sind entweder an den Teleskopstangen 2 oder im Sitz 1 selbst integriert. Bei Einbau in den Sitz 1 übertragen die Lautsprecher 4 den Schall zum Teil über Körperschall auf die auf dem Sitz 1 sitzende Person. Hierdurch wird ein besonders guter Gesamt-Höreindruck vermittelt.

Über die Bedieneinheit 8 ist die gesamte sitzplatzbezogene Beschallungseinrichtung steuerbar. Mit der Bedeineinheit 8 sind die Lautstärke, die Balance, die Höhen, die Tiefen usw. einstellbar. Die Steuereinheit 9, welche an die Bedieneinheit 8 angeschlossen ist, wertet die Bedienfunktionen aus und steuert unter anderem den Verstärker 10, welcher die Lautsprecher 3, 4 ansteuert.

Von der Audioanlage 13 des Fahrzeuges werden die Audiosignale an die Steuereinheit 9 übertragen. Die Steuereinheit 9 übermittelt diese Signale an den Verstärker 10. Der Verstärker 10 verstärkt die Audiosignale anhand der über die Bedieneinheit 8 eingestellten Vorgaben und leitet diese an die Lautsprecher 3, 4 weiter.
Die Steuereinheit 9 ist mit der Audioanlage 13 des Fahrzeuges über ein Bussystem 5 verbunden. An dieses Bussystem 5 sind sämtliche weiteren sitzplatzbezogene Beschallungseinrichtungen im Fahrzeug angeschlossen. Bei dem Bussystem handelt es sich in vorteilhafter Weise um einen optischen Bus, insbesondere einen MOST-Bus oder einen Fire-Wire-Bus.

In einer vorteilhaften Ausbildung der Erfindung sind die Lautsprecher 3 als Hochtonlautsprecher ausgestaltet und als kombiniertes Mikrofon-/Lautsprechersystem nutzbar. Auf diese Art und Weise ist es möglich, die sitzplatzbezognen Beschallungseinrichtung auch als Mikrofon zu nutzen. Auf diese Weise kann eine Gegensprecheinrichtung mit weiteren Personen im Fahrzeug, oder außerhalb des Fahrzeuges, über die Steuereinheit 9 und das Bussystem 5, hergestellt werden, wie etwa eine Mobilfunkverbindung. Hierzu muß an das Bussystem 5 eine Mobilfunkanlage 14 angeschlossen sein. Diese Mobilfunkanlage14 weist eine Steuereinheit auf, welche die Kommunikation zwischen der Mobilfunkanlage 14 und der jeweiligen Steuereinheit 9 der sitzplatbezogenen Beschallungseinrichtung steuert.

Die Verbindungskabel zwischen den Lautsprechern 3 und der Verstärkereinheit 10 erfolgt in den Teleskopstangen 2.
Im weiteren ist an der Befestigungsvorrichtung 6 der Teleskopstangen 2 eine Einrichtung 7 angeordnet, welche bei Überschreiten einer definierten Zugkraft an den ausgefahrenen Teleskopstangen 2, die Teleskopstangen 2 aus der Befestigungsvorrichtung 6 löst. Im Falle eines Unfalles wirken auf die ausgefahrenen Teleskopstangen 2 und einer auf dem Sitz 1 sitzenden Person erhebliche Kräfte ein. Um zu vermeiden, daß diese Person sich an einen ausgefahrenen Teleskopstangen 2 im Falle eines Unfalles verletzt, löst die Einrichtung 7 die Teleskopstangen 2 aus der Befestigungsvorrichtung 6. Die Teleskopstangen 2 werden durch die Verbindungsleitungen zwischen den Lautsprechern 3 und der Verstärkereinheit 10 im Bereich des Sitzes 1 gehalten. Die Vorrichtung ist derart ausgestaltet, daß die Teleskopstangen 2 nach der Lösung aus der Befestigsungsvorrichtung 6 wieder problemlos an bzw. in der Befestigungsvorrichtung 6 fixiert werden können.

In einer weiteren vorteilhaften Ausgestaltung der Erfindung sind die Teleskopstangen 2 in den Armlehnen des Sitzes 1 eingearbeitet bzw. aus diesen herausfahrbar/herausziehbar.

In einer weiteren vorteilhaften Ausgestaltung der Erfindung ermittelt die Steuereinheit 9 ermittelt, ob neben und/oder hinter und/oder vor dem Sitz 1 ein weiterer Sitz im Fahrzeug belegt ist. Ist dies der Fall ermittelt die Steuereinheit 9 welches Audioprogramm an dieser sitzplatzbezogener Beschallungseinrichtung eingestellt ist. In Abhängigkeit von den Audioprogrammen der benachbarten sitzplatzbezogener Beschallungseinrichtung und den Belegunszuständen der benachbarten Sitze ermittelt die Steuereinheit 9 die maximal wählbare Lautstärke der Lautsprecher 3, 4 der sitzplatzbezogene Beschallungseinrichtung welche eingestellt werden kann, ohne das die benachbarten Passagiere durch das Programm der sitzplatzbezogener Beschallungseinrichtung gestört werden. Die Steuereinheit 9 begrenzt dann die maximal einstellbare Lautstärke auf diesen Wert.

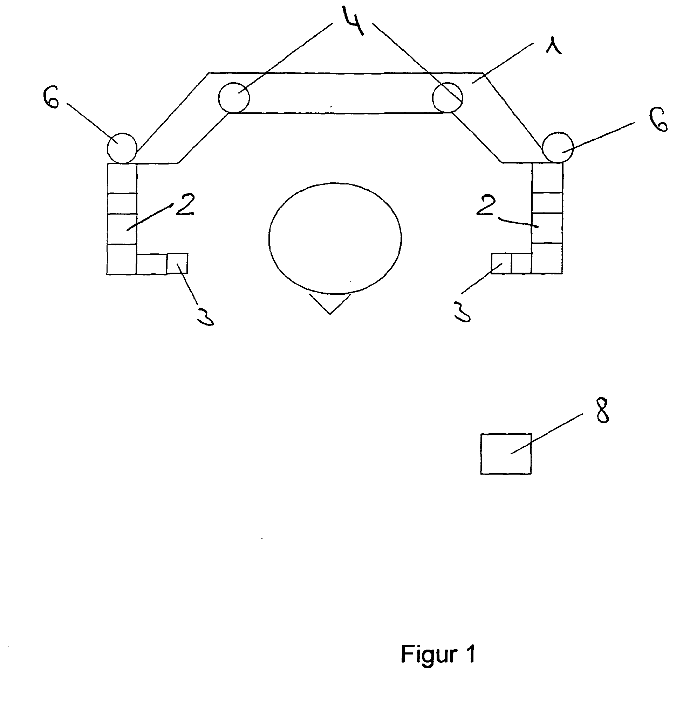

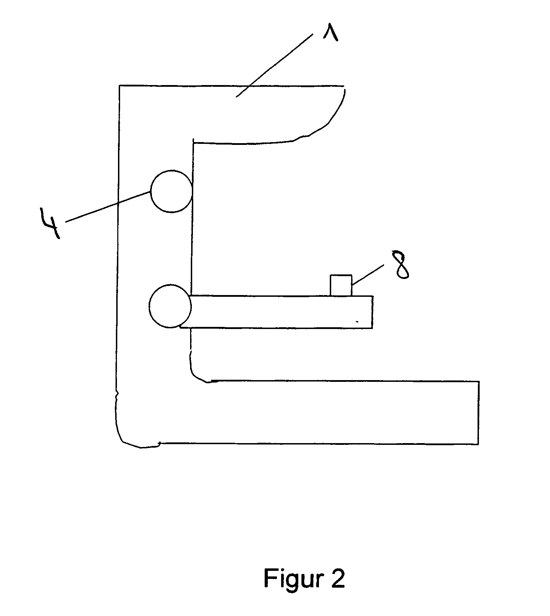

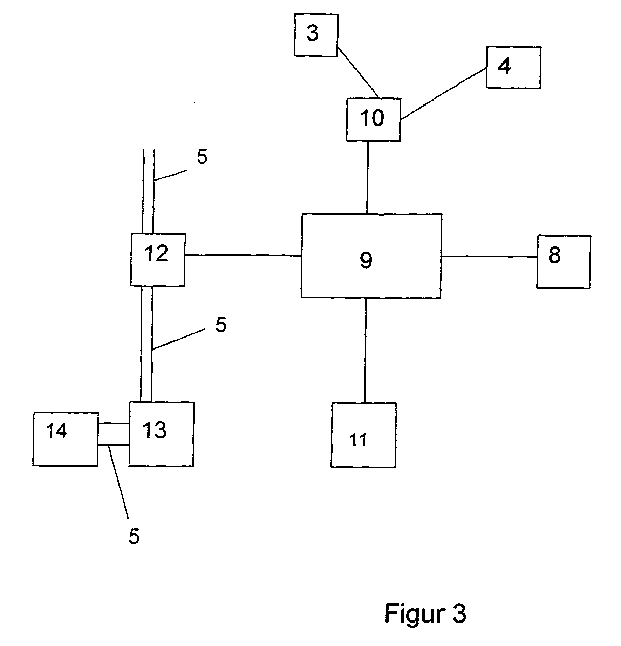

## Patentansprüche

1. Sitzplatzbezogene Beschallungseinrichtung, insbesondere für Sitze (1) in einem Fahrzeug, bestehend aus Lautsprechern (3, 4), einer beweglichen Vorrichtung (2), welche im und am Sitz (1) angeordnet ist, einer Bedieneinheit (8), einer Steuereinheit (9) mit einer Schnittstelle (12), einer Verstärkereinheit (9), wobei mindestens ein Lautsprecher (3) an der beweglichen Vorrichtung (2) angeordnet ist, mindestens ein Lautsprecher (4) im Sitz (1) angeordnet ist und die bewegliche Vorrichtung (2) in mindestens eine Richtung beweglich ist,
**dadurch gekennzeichnet, dass**
die Lautsprecher im oberen und/oder mittleren Bereich des Sitzes (1), symmetrisch zur Mitte der Lehne des Sitzes (1) angeordnet sind, wobei die Lautsprecher (3) Hochtonkalottenlautsprecher und die Lautsprecher (4) Tieftonlautsprecher und Mitteltonlautsprecher sind oder daß die Lautsprecher (4) kombinierte Mittelton-/Basslautsprecher sind, wobei
die Steuereinheit (9) über die Schnittstelle (12) mit einer Audioanlage (13) des Fahrzeuges über ein Bussystem (5) verbunden ist.

2. Sitzplatzbezogene Beschallungseinrichtung nach Anspruch 1, **dadurch gekennzeichnet, dass** die bewegliche Vorrichtung (2) am oberen Ende des Sitzes (1) oder im mittleren Bereich des Sitzes (1) über eine Befestigungsvorrichtung (6) am Sitz (1) befestigt ist, und die bewegliche Vorrichtung (2) aus mindestens zwei Teleskopstangen (2) besteht, welche in sich schiebbar gelagert sind.

3. Sitzplatzbezogene Beschallungseinrichtung nach einem oder mehreren der vorherigen Ansprüche, **dadurch gekennzeichnet, dass** die Befestigungsvorrichtung (6) schwenkbar ist oder die Teleskopstangen (2) um die Befestigungsvorrichtung (6) drehbar gelagert sind undmindestens ein Lautsprecher (3) an jeder der Teleskopstangen (2) angeordnet ist.

4. Sitzplatzbezogene Beschallungseinrichtung nach einem oder mehreren der vorangegangenen Ansprüche, **dadurch gekennzeichnet, dass** mindestens ein Lautsprecher (3) ein integriertes Mikrofon aufweisen.

5. Sitzplatzbezogene Beschallungseinrichtung nach einem oder mehreren der vorherigen Ansprüche, **dadurch gekennzeichnet, dass** Anschlußkabel zwischen der Verstärkereinheit (10) und den Lautsprechern (3) in den Teleskopstangen (2) geführt sind.

6. Sitzplatzbezogene Beschallungseinrichung nach einem oder mehreren der vorherigen Ansprüche, **dadurch gekennzeichnet, dass** die Bedieneinheit (8) an der Steuereinheit (9) angeschlossen ist, die Bedieneinheit (8) am Sitz (1) angeordnet ist und über die Bedieneinheit (8) die verschiedenen Funktionen der sitzplatzbezogenen Beschallungseinrichung steuerbar sind.

7. Sitzplatzbezogene Beschallungseinrichung nach einem oder mehreren der vorherigen Ansprüche, **dadurch gekennzeichnet, dass** über die Bedieneinheit (8) verschiedene Funktionen, insbesondere Audioprogramme, der Audibanlage (13) wählbar sind und die Bedieneinheit (8) Zifferntasten aufweist.

8. Sitzplatzbezogene Beschallungseinrichtung nach einem oder mehreren der vorherigen Ansprüche, **dadurch gekennzeichnet, dass** über die Bedieneinheit (8) Elektromotoren (11) steuerbar sind, welche die Teleskopstangen (2) bewegen.

9. Sitzplatzbezogene Beschallungseinrichtung nach einem oder mehreren der vorherigen Ansprüche, **dadurch gekennzeichnet, dass** in der Befestigungsvorrichtung (6) eine Einrichtung integriert ist, welche die Teleskopstangen (2) bei Überschreiten einer einstellbaren Zugkraft an den Teleskopstangen (2) aus der Befestigungsvorrichtung (6) löst, wobei die Teleskopstangen (2) aus Kunststoff gefertigt und als Hohlstangen ausgebildet und verformbar sind.

10. Sitzplatzbezogene Beschallungseinrichtung nach einem oder mehreren der vorherigen Ansprüche, **dadurch gekennzeichnet, dass** die Steuereinheit (9) die Körpergröße eines Passagiers auf dem Sitz (1) erfasst und die Teleskopstangen (2) auf die Körpergröße des Passagiers einstellt.

11. Sitzplatzbezogene Beschallungseinrichtung nach einem oder mehreren der vorherigen Ansprüche, **dadurch gekennzeichnet, dass** die Steuereinheit (9) ermittelt, ob neben und/oder hinter und/oder vor dem Sitz (1) ein weiterer Sitz belegt ist und welches Audioprogramm an dessen sitzplatzbezogener Beschallungseinrichtung eingestellt ist und in Abhängigkeit von den Audioprogrammen und den Belegungszuständen der benachbarten Sitze die Steuereinheit (9) die maximal wählbare Lautstärke der Lautsprecher (3, 4) der sitzplatzbezogenen Beschallungseinrichtung begrenzt.

12. Sitzplatzbezogene Beschallungseinrichtung nach einem oder mehreren der vorherigen Ansprüche,
**dadurch gekennzeichnet, daß**
die Steuereinheit (9) ermittelt, ob neben und/oder hinter und/oder vor dem Sitz (1) ein weiterer Sitz belegt ist und welches Audioprogramm an dessen sitzplatzbezogener Beschallungseinrichtung eingestellt ist und in Abhängigkeit von den Audioprogrammen und den Belegunszuständen der benachbarten Sitze die Steuereinheit (9) die maximal wählbare Lautstärke der Lautsprecher (3, 4) der sitzplatzbezogene Beschallungseinrichtung begrenzt.

## Claims

1. Sound system relating to a seat, in particular for seats (1) in a vehicle, comprising speakers (3, 4), a moveable device (2) which is arranged in and on the seat (1), an operating unit (8), a control unit (9) with an interface (12), and an amplifier unit (9), with at least one speaker (3) being arranged on the moveable device (2), at least one speaker (4) being arranged in the seat (1) and the moveable device (2) being moveable in at least one direction, **characterized in that** the speakers are arranged symmetrically with respect to the centre of the backrest of the seat (1) in the upper and/or central region of the seat (1), the speakers (3) being tweeter dome speakers and the speakers (4) being woofer speakers and mid-range speakers, or **in that** the speakers (4) are combined mid-range/base speakers, the control unit (9) being connected via the interface (12) to an audio system (13) of the vehicle by a bus system (5).

2. Sound system relating to a seat according to Claim 1, **characterized in that** the moveable device (2) is fastened to the upper end of the seat (1) or in the central region of the seat (1) via a fastening device (6) on the seat (1), and the moveable device (2) comprises at least two telescopic rods (2) which are mounted such that they can be pushed into themselves.

3. Sound system relating to a seat according to one or more of the preceding claims, **characterized in that** the fastening device (6) can be pivoted or the telescopic rods (2) are mounted rotatably about the fastening device (6), and at least one speaker (3) is arranged on each of the telescopic rods (2).

4. Sound system relating to a seat according to one or more of the preceding claims, **characterized in that** at least one speaker (3) has an integrated microphone.

5. Sound system relating to a seat according to one or more of the preceding claims, **characterized in that** connecting cables are routed between the amplifier unit (10) and the speakers (3) in the telescopic rods (2).

6. Sound system relating to a seat according to one or more of the preceding claims, **characterized in that** the operating unit (8) is connected to the control unit (9), the operating unit (8) is arranged on the seat (1) and the various functions of the sound system relating to a seat can be controlled via the operating unit (8).

7. Sound system relating to a seat according to one or more of the preceding claims, **characterized in that** various functions, in particular audio programs of the audio system (13) can be selected via the operating unit (8) and the operating unit (8) has numeral keys.

8. Sound system relating to a seat according to one or more of the preceding claims, **characterized in that** electric motors (11) which move the telescopic rods (2) can be controlled via the operating unit (8).

9. Sound system relating to a seat according to one or more of the preceding claims, **characterized in that** there is a system integrated in the fastening device (6) which releases the telescopic rods (2) from the fastening device (6) when an adjustable tensile force on the telescopic rods (2) is exceeded, the telescopic rods (2) being manufactured from plastic and being designed as hollow rods and being deformable.

10. Sound system relating to a seat according to one or more of the preceding claims, **characterized in that** the control unit (9) detects the height of a passenger on the seat (1) and adjusts the telescopic rods (2) to the height of the passenger.

11. Sound system relating to a seat according to one or more of the preceding claims, **characterized in that** the control unit (9) determines whether a further seat is occupied next to and/or behind and/or in front of the seat (1) and which audio program is set at its sound system relating to the seat, and the control unit (9) limits the maximum selectable volume of the speakers (3, 4) of the sound system relating to the seat as a function of the audio programs and the states of occupation of the adjacent seats.

12. Sound system relating to a seat according to one or more of the preceding claims, **characterized in that** the control unit (9) determines whether a further seat is occupied next to and/or behind and/or in front of the seat (1) and which audio program is set at its sound system relating to the seat, and the control unit (9) limits the maximum selectable volume of the speakers (3, 4) of the sound system relating to the seat as a function of the audio programs and the states of occupation of the adjacent seats.

## Revendications

1. Dispositif de sonorisation associé à un siège, notamment pour les sièges (1) dans un véhicule, composé de haut-parleurs (3, 4), d'un dispositif mobile (2) qui est disposé dans et sur le siège (1), d'une unité de commande (8), d'une unité de contrôle (9) munie d'une interface (12), d'une unité d'amplification (9), au moins un haut-parleur (3) étant disposé sur le dispositif mobile (2), au moins un haut-parleur (4) étant disposé dans le siège (1) et le dispositif mobile (2) étant mobile dans au moins une direction, **caractérisé en ce que** les haut-parleurs sont disposés dans la zone supérieure et/ou centrale du siège (1) de manière symétrique par rapport au centre du dossier du siège (1), les haut-parleurs (3) étant des tweeters à calotte et les haut-parleurs (4) étant des boomers et médiums ou que les haut-parleurs (4) sont des haut-parleurs combinés médium/boomer, l'unité de contrôle (9) étant reliée par le biais de l'interface (12) à un équipement audio (13) du véhicule par le biais d'un système de bus (5).

2. Dispositif de sonorisation associé à un siège selon la revendication 1, **caractérisé en ce que** le dispositif mobile (2) est fixé au siège (1) à l'extrémité supérieure du siège (1) ou dans la zone centrale du siège (1) par le biais d'un dispositif de fixation (6) et le dispositif mobile (2) se compose d'au moins deux tiges télescopiques (2) qui sont montées de manière à pouvoir coulisser l'une dans l'autre.

3. Dispositif de sonorisation associé à un siège selon une ou plusieurs des revendications précédentes, **caractérisé en ce que** le dispositif de fixation (6) est pivotant ou les tiges télescopiques (2) sont montées de manière à pouvoir tourner autour du dispositif de fixation (6) et au moins un haut-parleur (3) est disposé sur chacune des tiges télescopiques (2).

4. Dispositif de sonorisation associé à un siège selon une ou plusieurs des revendications précédentes, **caractérisé en ce qu'**au moins un haut-parleur (3) présente un microphone intégré.

5. Dispositif de sonorisation associé à un siège selon une ou plusieurs des revendications précédentes, **caractérisé en ce que** les câbles de raccordement entre l'unité d'amplification (10) et les haut-parleurs (3) passent dans les tiges télescopiques (2).

6. Dispositif de sonorisation associé à un siège selon une ou plusieurs des revendications précédentes, **caractérisé en ce que** l'unité de commande (8) est raccordée à l'unité de contrôle (9), l'unité de commande (8) est disposée sur le siège (1) et les différentes fonctions du dispositif de sonorisation associé à un siège peuvent être commandées par le biais de l'unité de commande (8).

7. Dispositif de sonorisation associé à un siège selon une ou plusieurs des revendications précédentes, **caractérisé en ce que** différentes fonctions, notamment des programmes audio, de l'équipement audio (13) peuvent être sélectionnées par le biais de l'unité de commande (8) et l'unité de commande (8) présente des touches numériques.

8. Dispositif de sonorisation associé à un siège selon une ou plusieurs des revendications précédentes, **caractérisé en ce que** des moteurs électriques (11) qui déplacent les tiges télescopiques (2) peuvent être commandés par le biais de l'unité de commande (8).

9. Dispositif de sonorisation associé à un siège selon une ou plusieurs des revendications précédentes, **caractérisé en ce que** dans le dispositif de fixation (6) est intégré un dispositif qui détache les tiges télescopiques (2) du dispositif de fixation (6) en cas de dépassement d'une force de traction réglable sur les tiges télescopiques (2), les tiges télescopiques (2) étant fabriquées en matière plastique et étant réalisées sous la forme de tiges creuses et étant déformables.

10. Dispositif de sonorisation associé à un siège selon une ou plusieurs des revendications précédentes, **caractérisé en ce que** l'unité de contrôle (9) détecte la taille corporelle d'un passager sur le siège (1) et règle les tiges télescopiques (2) en fonction de la taille corporelle du passager.

11. Dispositif de sonorisation associé à un siège selon une ou plusieurs des revendications précédentes, **caractérisé en ce que** l'unité de contrôle (9) détermine si un autre siège est occupé à côté et/ou derrière et/ou devant le siège (1) et quel programme audio est réglé sur le dispositif de sonorisation associé à ce siège et l'unité de contrôle (9) limite le volume maximum sélectionnable des haut-parleurs (3, 4) du dispositif de sonorisation associé à un siège en fonction des programmes audio et de l'état d'occupation des sièges voisins.

12. Dispositif de sonorisation associé à un siège selon une ou plusieurs des revendications précédentes, **caractérisé en ce que** l'unité de contrôle (9) détermine si un autre siège est occupé à côté et/ou derrière et/ou devant le siège (1) et quel programme audio est réglé sur le dispositif de sonorisation associé à ce siège et l'unité de contrôle (9) limite le volume maximum sélectionnable des haut-parleurs (3, 4) du dispositif de sonorisation associé à un siège en fonction des programmes audio et de l'état d'occupation des sièges voisins.
